# EUROPEAN PATENT APPLICATION

(11) **EP 4 714 678 A1**
(43) Date of publication of application: **25.03.2026**
(21) Application number: 25198391.2
(22) Date of filing: 27.08.2025
(51) Int. Cl.: B60C 11/03

(54) **PNEUMATIC TIRE**

(30) Priority: 19.09.2024 JP 2024162407
(71) Applicant: TOYO TIRE CORPORATION, Itami-shi, Hyogo 6640847 (JP)
(72) Inventor: HIRATA, Michihiro, Itami-shi, Hyogo, 6640847 (JP)
(74) Representative: Müller-Boré & Partner Patentanwälte PartG mbB

(57) **Abstract**

A pneumatic tire (10) which reduces vehicle exterior noise is provided. A pneumatic tire (10) according to the present disclosure has a plurality of primary grooves (11, 12, 13, 14), and has a direction of equipping on a vehicle body designated. In a ground-contacting region which contacts a flat road surface when a load of 85% of a regular load (maximum load capacity) at a regular internal pressure is applied in a state in which the pneumatic tire (10) is equipped on a regular rim and air is filled to achieve the regular internal pressure; a length L1 in a circumferential direction at a position which is 1/10^{th} of a tire ground-contacting width toward a vehicle interior side from a ground-contacting end (E1, E2) on a vehicle exterior side, and a length L2 in the circumferential direction at a tire equator (CL) satisfy a relationship of (L1/L2) ≤ 0.7; and a cross-sectional area of an outer primary groove (11), which is a primary groove positioned at an outermost position on the vehicle exterior side among the plurality of primary grooves (11, 12, 13, 14), is smaller than cross-sectional areas of the plurality of primary grooves (12, 13, 14) other than the outer primary groove (11).

## Description

### TECHNICAL FIELD

The present disclosure relates to a pneumatic tire, and in particular to a pneumatic tire which reduces vehicle exterior noise.

### BACKGROUND

In recent years, demand for reduction of vehicle exterior noise generated during travel of an automobile is increasing. Vehicle exterior noise includes noise from tires in addition to an engine sound, and low-vehicle-external-sound tires which can reduce noise from the tires are being vigorously developed. In development of low-noise tires, it is important to reduce air column resonance sound generated in a primary groove.

JP 2016-40156 A discloses a technique for reducing the air column resonance sound generated in the primary groove by providing, on a land portion. a longitudinal narrow groove extending in a circumferential direction, and periodically varying a depth of the longitudinal narrow groove in the circumferential direction.

However, the longitudinal narrow groove provided on the land portion may become another source of noise. The technique of JP 2016-40156 A is not sufficient for reducing the vehicle exterior noise, and there remains room for improvement.

An advantage of the present disclosure lies in provision of a pneumatic tire which reduces the vehicle exterior noise.

### SUMMARY

According to one aspect of the present disclosure, there is provided a pneumatic tire comprising a plurality of primary grooves, and in which a direction of equipping on a vehicle body is designated, wherein, in a ground-contacting region which contacts a flat road surface when a load of 85% of a regular load (maximum load capacity) at a regular internal pressure is applied in a state in which the pneumatic tire is equipped on a regular rim and air is filled to achieve the regular internal pressure: a length L1 in a circumferential direction at a position which is 1/10^{th} of a tire ground-contacting width toward a vehicle interior side from a ground-contacting end on a vehicle exterior side, and a length L2 in the circumferential direction at a tire equator, satisfy a relationship of (L1/L2) ≤ 0.7; and a cross-sectional area of an outer primary grove, which is a primary groove positioned at an outermost position on the vehicle exterior side among the plurality of primary grooves, is smaller than cross-sectional areas of the plurality of primary grooves other than the outer primary groove.

According to a pneumatic tire of an aspect of the present disclosure, the vehicle exterior noise can be reduced.

### BRIEF DESCRIPTION OF DRAWINGS

Embodiment(s) of the present disclosure will be described based on the following figures, wherein:
FIG. 1 is a plan view showing a part of a tread pattern of a pneumatic tire according to an embodiment of the present disclosure;
FIG. 2 is a diagram showing a ground-contacting region of the pneumatic tire according to the embodiment of the present disclosure;
FIG. 3 is a diagram showing areas of the primary grooves in the ground-contacting region; and
FIG. 4 is a diagram showing lengths of the primary grooves in the ground-contacting region.

### DESCRIPTION OF EMBODIMENTS

A pneumatic tire 10 according to an embodiment of the present disclosure will now be described in detail with reference to the drawings. The embodiment described below is merely exemplary, and the present disclosure is not limited to the embodiment described below. Further, configurations obtained by selectively combining constituent elements of the embodiment described below are within the scope of the present disclosure.

The pneumatic tire 10 according to the present embodiment has a typical structure as a pneumatic tire 10 except for a tread, which is a portion which contacts a road surface. Specifically, bead portions each including a bead core and a bead filler are provided at respective sides in a tire axial direction, and a carcass ply is provided from the bead portion at one side in the tire axial direction to the bead portion at the other side. A belt is provided at a radially outer side of the carcass ply, and the tread is provided on the radially outer side of the belt. An inner liner is provided at an inner side of the carcass ply, and side wall rubber is provided at each side in the tire axial direction of the carcass ply. In the pneumatic tire 10, a plurality of rubber members may be provided in addition to the above-described elements.

In the present disclosure, a shape of the pneumatic tire 10 refers to a shape in a state in which the pneumatic tire 10 is equipped on a regular rim and air is filled to achieve a regular internal pressure. A ground-contacting region 30 to be described below is a region which contacts a flat road surface when a load of 85% of a normal load (maximum load capacity) at the regular internal pressure is applied. Ground-contacting ends E1 and E2 are defined as respective ends in the tire axial direction of the ground-contacting region 30.

Here, the "regular rim" refers to a rim determined by a tire standard, and is defined as a "standard rim" in JATMA, and a "Measuring Rim" in TRA and ETRTO. The "regular internal pressure" is defined as a "maximum pneumatic pressure" in JATMA, a maximum value described in the table, "TIRE LOAD LIMITS AT VARIOUS COLD INFLATION PRESSURES" in TRA, and an "INFLATION PRESSURE" in ETRTO. The regular internal pressure is normally set to 180 kPa in the case of the tire for passenger cars, and is set to 220 kPa in the case of tires labeled "Extra Load" or "Reinforced". The "regular load" is defined as a "maximum load capability" in JATMA, a maximum value described in the table, "TIRE LOAD LIMITS AT VARIOUS COLD INFLATION PRESSURES" in TRA, and a "LOAD CAPACITY" in ETRTO.

Vehicle exterior noise caused by the pneumatic tire 10 can be measured, for example, according to JIS D8301:2020. The vehicle exterior noise is measured by a microphone mounted on a road surface on a side surface side of the vehicle when a vehicle having the engine stopped passes through a traveling line. The pneumatic tire 10 described below achieves an advantage of reducing the vehicle external noise, and the advantage is particularly significant for vehicle exterior noise around 1 kHz.

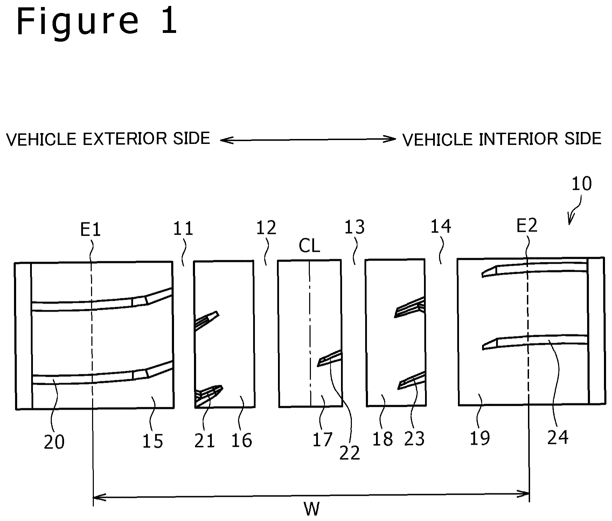

FIG. 1 is a plan view showing a part of a tread pattern of the pneumatic tire 10 according to the embodiment of the present disclosure. The tread pattern of the pneumatic tire 10 is formed by the pattern shown in FIG. 1 being repeatedly arranged in a tire circumferential direction. With regard to a length in the tire circumferential direction of one pitch of the tread pattern (pitch length), all of the pitch lengths may be equal to each other, but desirably, from the viewpoint of reducing the vehicle exterior noise and vehicle interior noise, the pitch length varies in the tire circumferential direction.

The pneumatic tire 10 is a tire in which the direction of equipping on a vehicle body is designated. That is, the tread pattern of the pneumatic tire 10 is not point symmetric, and, when the pneumatic tire 10 is rotated 180° around a point on a tire equator CL, the resulting shape differs from the shape before the rotation. The tire equator CL is a virtual line along the tire circumferential direction, and passing through a center in the tire axial direction of the tread.

The pneumatic tire 10 has a plurality of primary grooves. The primary grooves extend along the tire circumferential direction, parallel with each other. A width of each primary groove is constant in the tire circumferential direction. Depths of the primary grooves may be equal to each other. In the example configuration illustrated in FIG. 1, the pneumatic tire 10 has four primary grooves 11, 12, 13, and 14. The tread has two shoulder ribs 15 and 19, two mediate ribs 16 and 18, and one center rib 17, partitioned by the primary grooves 11, 12, 13, and 14. No particular limitation is imposed on the number of the primary grooves, and the number is, for example, 2 or more and 5 or less. The number of ribs changes according to the number of the primary grooves.

A width of a primary groove positioned at an outermost position on a vehicle exterior side (hereinafter referred to as an "outer primary groove") among the plurality of primary grooves is smaller than widths of the primary grooves other than the outer primary groove. With this configuration, the relationships in the length and in the cross-sectional area in the ground-contacting region 30 can be adjusted in a manner described below. The width of the outer primary groove is, for example, greater than or equal to 0.7 times and less than or equal to 0.8 times a width of a primary groove having the largest width. Alternatively, a configuration may be employed in which, among adjacent primary grooves, a width of the primary groove positioned on the vehicle exterior side is smaller than or equal to a width of the primary groove positioned on a vehicle interior side. In the example configuration illustrated in FIG. 1, the primary grooves 12, 13, and 14 have approximately the same width as each other, and the width of the outer primary groove 11 is greater than or equal to 0.7 times and less than or equal to 0.8 times the width of each of the primary grooves 12, 13, and 14. The widths of the primary grooves 11, 12, 13, and 14 are not particularly limited to those in the example configuration illustrated in FIG. 1.

On the tread, a plurality of lateral grooves extending in a direction crossing the primary grooves and connected to the primary grooves are formed. The lateral groove is a groove having a narrower width than the primary groove, and a groove width of the lateral groove may vary. A maximum width of the lateral groove is, for example, greater than or equal to 0.1 times and less than or equal to 0.5 times the width of the primary groove to which the lateral groove is connected. The lateral groove may be shallower than the primary groove. The lateral groove may extend straight in the tire axial direction, but desirably, from a viewpoint of wear resistance, the lateral groove is inclined at a predetermined angle with respect to the tire axial direction.

The tread has a lateral groove 20 which communicates from the outer primary groove 11 to a tire outer side. With this configuration, water drainage property of the pneumatic tire 10 can be improved. In the example configuration illustrated in FIG. 1, the pneumatic tire 10 has the lateral groove 20 that communicates from the outer primary groove 11 to the tire outer side in the tire axial direction, in the shoulder rib 15 on the vehicle exterior side. That is, in the lateral groove 20, an end on the vehicle interior side is connected to the outer primary groove 11, and an end on the vehicle exterior side extends beyond the ground-contacting end E1 toward the tire outer side, and reaches an end on the vehicle exterior side of the shoulder rib 15. The lateral groove 20 is inclined at a predetermined angle with respect to the tire axial direction in a region near a portion connected to the outer primary groove 11, but becomes approximately parallel to the tire axial direction toward the vehicle exterior side.

A lateral groove 21 has an end on the vehicle exterior side connected to the outer primary groove 11, and an end on the vehicle interior side blocked in the mediate rib 16. A lateral groove 22 has an end on the vehicle interior side connected to the primary groove 13, and an end on the vehicle exterior side blocked in the center rib 17. The end on the vehicle exterior side of the lateral groove 22 is positioned on the vehicle interior side in relation to the tire equator CL. A lateral groove 23 has an end on the vehicle interior side connected to the primary groove 14, and an end on the vehicle exterior side blocked in the mediate rib 18. The lateral grooves 21, 22, and 23 are inclined at approximately the same angle with respect to the tire axial direction. In the example configuration illustrated in FIG. 1, the lateral grooves 21, 22, and 23 are inclined at the same predetermined angle as the lateral groove 20 with respect to the tire axial direction. Lengths of the lateral grooves 21, 22, and 23 are approximately equal to each other.

The lateral groove 24 has an end on the vehicle exterior side blocked in the shoulder rib 19, and an end on the vehicle interior side extending beyond the ground-contacting end E2 to the tire outer side, and reaching the end on the vehicle interior side of the shoulder rib 15. The lateral groove 24 is inclined at the same predetermined angle as the lateral groove 20 with respect to the tire axial direction in a region near a tip on the vehicle exterior side which is blocked, but becomes approximately parallel to the tire axial direction toward the vehicle interior side.

As described, because a lateral groove in communication with the rib at the outermost position on the vehicle exterior side is provided, and lateral grooves that are blocked in the ribs are provided for ribs other than the rib at the outermost position on the vehicle exterior side, rigidity of the tire is secured, and as a result, water drainage property and braking characteristic can both be achieved. The shapes of the lateral grooves 20, 21, 22, 23, and 24 are not particularly limited to those of the example configuration illustrated in FIG. 1.

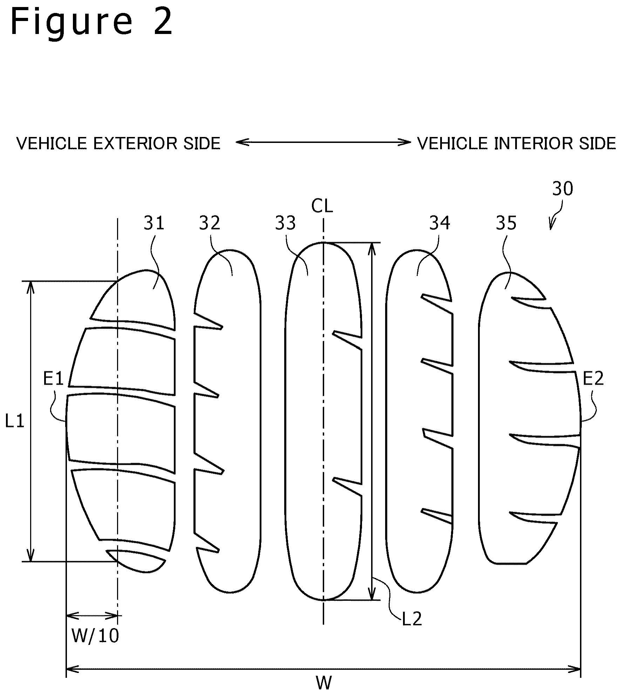

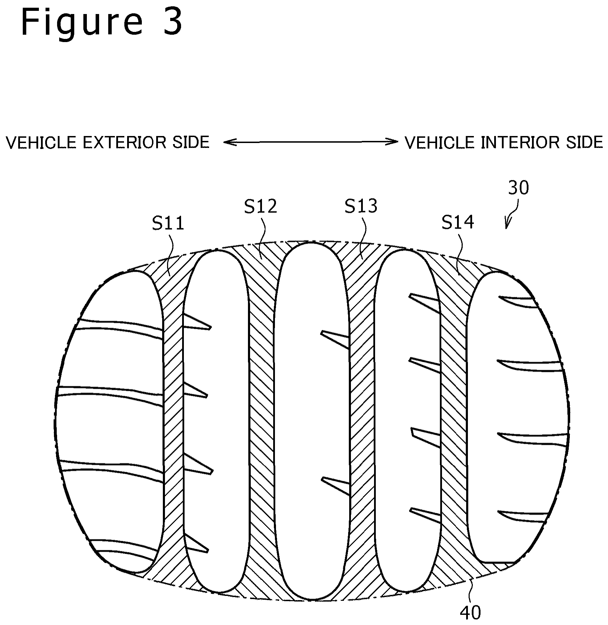

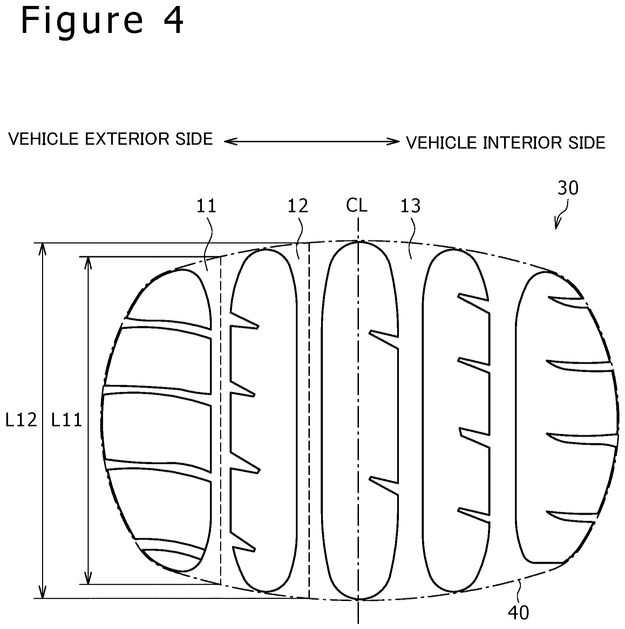

Next, the ground-contacting region 30 of the pneumatic tire 10 will be described with reference to FIGs. 2 to 4. The ground-contacting region 30 refers to a region which contacts a flat road surface when a load of 85% of a regular load (maximum load capacity) at the regular internal pressure is applied by the pneumatic tire 10. FIG. 2 is a diagram showing the ground-contacting region 30 of the pneumatic tire according to the embodiment of the present disclosure. FIG. 3 is a diagram showing areas of the primary grooves 11, 12, 13, and 14 at the ground-contacting region 30. FIG. 4 is a diagram showing lengths of the primary grooves 11 and 12 at the ground-contacting region 30.

As shown in FIG. 2, the ground-contacting region 30 has a first region 31, a second region 32, a third region 33, a fourth region 34, and a fifth region 35. The first region 31, the second region 32, the third region 33, the fourth region 34, and the fifth region 35 are regions formed by the shoulder rib 15, the mediate rib 16, the center rib 17, the mediate rib 18, and the shoulder rib 19 respectively contacting the road surface. All of the first region 31, the second region 32, the third region 33, the fourth region 34, and the fifth region 35 have lengths in the tire circumferential direction longer than lengths in the tire axial direction, and thus have an elongated shape. In particular, the second region 32, the third region 33, and the fourth region 34 have the lengths in the tire circumferential direction longer and the lengths in the tire axial direction shorter in comparison with the first region 31 and the fifth region 35. In the ground-contacting region 30, a trace of the lateral groove can be seen. The first region 31 is divided into 5 parts by the lateral grooves, and each of the second region 32, the third region 33, the fourth region 34, and the fifth region 35 is formed from one continuous region.

In the ground-contacting region 30, a length L1 in the circumferential direction at a position which is 1/10^{th} of a tire ground-contacting width W to the vehicle interior side from the ground-contacting end E1 on the vehicle exterior side and a length L2 in the circumferential direction at the tire equator CL satisfy a relationship of (L1/L2) ≤ 0.7. At the position which is 1/10^{th} of the tire ground-contacting width W to the vehicle interior side from the ground-contacting end E1 on the vehicle exterior side, for example, there is the shoulder rib 15. The length L2 is the maximum length of the ground-contacting region 30 in the tire circumferential direction.

The value of (L1/L2) is an indication indicating an outer shape of the ground-contacting region 30. The maximum value which can be taken by (L1/L2) is 1, and, when (L1/L2) = 1, the ground-contacting region 30 has a rectangular shape. As the value of (L1/L2) decreases from 1, the ground-contacting region 30 becomes closer to an elliptical shape.

The shape of the ground-contacting region 30 can be changed, for example, by changing a radius of curvature of the tread. When the radius of curvature of the tread is increased, the shape of the ground-contacting region 30 becomes closer to the rectangular shape, and when the radius of curvature of the tread is decreased, the shape of the ground-contacting region 30 becomes closer to the elliptical shape. Thus, by reducing the radius of curvature of the tread, it becomes possible to satisfy the relationship of (L1/L2) ≤ 0.7.

As shown in FIG. 3, in the ground-contacting region 30, a cross-sectional area S11 of the outer primary groove 11 is smaller than any of the cross-sectional areas S12, S13, and S14, respectively of the plurality of primary grooves 12, 13, and 14 other than the outer primary groove 11. Here, the cross-sectional areas S11, S12, S13, and S14 are obtained by calculating areas of portions corresponding respectively to the primary grooves 11, 12, 13, and 14 at an inside of a virtual line 40 drawn from an outer edge of the ground-contacting region 30. As described above, the virtual line 40 has a shape close to an ellipse.

The cross-sectional areas S11, S12, S13, and S14 are calculated, for example, using image processing software. Alternatively, a configuration may be employed in which an image of the ground-contacting region 30 is read into image processing software, the virtual line 40 is drawn by designating the outer edge of the ground-contacting region 30, and the areas of portions corresponding respectively to the primary grooves 11, 12, 13, and 14 are calculated while avoiding inclusion of the lateral groove.

As described, the vehicle exterior noise can be reduced by satisfying the relationship of (L1/L2) ≤ 0.7 and setting the cross-sectional area S11 of the primary groove 11 to be smaller than any of the cross-sectional areas of the primary grooves 12, 13, and 14, in the ground-contacting region 30.

The cross-sectional area S11 of the outer primary groove is desirably greater than or equal to 70% and less than or equal to 80% with respect to any of the cross-sectional areas S12, S13, and S14 respectively of the plurality of primary grooves 12, 13, and 14 other than the outer primary groove 11. By setting S11 to be less than or equal to 80% of each of S12, S13, and S14, the advantage of reduction of the vehicle exterior noise can be made more significant. In addition, by setting S11 to be greater than or equal to 70% of each of S12, S13, and S14, the water drainage property can be improved.

In the ground-contacting region 30, a length L11 of the outer primary groove 11 is desirably greater than or equal to 90% and less than or equal to 95% with respect to a length of a primary groove closest to the tire equator CL among the plurality of primary grooves. By setting the length L11 of the outer primary groove 11 to be less than or equal to 95% with respect to the length of the primary groove closest to the tire equator CL among the plurality of primary grooves, the advantage of reduction of the vehicle exterior noise can be made more significant. By setting the length L11 of the outer primary groove 11 to be greater than or equal to 90% with respect to the length of the primary groove closest to the tire equator CL among the plurality of primary grooves, the water drainage property can be improved.

In an example configuration illustrated in FIG. 4, the primary groove 12 and the primary groove 13 are distanced from the tire equator CL by the same distance, and the primary groove 12 and the primary groove 13 are thus primary grooves closest to the tire equator CL among the plurality of primary grooves. As shown in FIG. 4, the length L11 of the primary groove 11 is measured on a straight line through which a point at a center in the width direction of the primary groove 11 passes, and is a distance between two intersections where this straight line intersects the virtual line 40. The length L12 of the primary groove 12 is measured in a manner similar to L11. Although the illustration of the length L13 of the primary groove 13 is omitted in FIG. 4, the length L13 is measured in a manner similar to L11 and L12.

As described, the vehicle external noise can be reduced by employing the pneumatic tire according to the present disclosure, having a predetermined shape of the ground-contacting region.

### REFERENCE SIGNS LIST

10 pneumatic tire, 11 (outer) primary groove, 12, 13, 14 primary groove, 15, 16, 17, 18, 19 rib, 20, 21, 22, 23, 24 lateral groove, 30 ground-contacting region, 31 first region, 32 second region, 33 third region, 34 fourth region, 35 fifth region, 40 virtual line, CL equator, E1, E2 ground-contacting end

## Claims

1. A pneumatic tire (10) comprising a plurality of primary grooves (11, 12, 13, 14), and in which a direction of equipping on a vehicle body is designated, wherein
in a ground-contacting region which contacts a flat road surface when a load of 85% of a regular load (maximum load capacity) at a regular internal pressure is applied in a state in which the pneumatic tire (10) is equipped on a regular rim and air is filled to achieve the regular internal pressure:
a length L1 in a circumferential direction at a position which is 1/10^{th} of a tire ground-contacting width toward a vehicle interior side from a ground-contacting end (E1 E2) at a vehicle external side, and a length L2 in the circumferential direction at a tire equator (CL), satisfy a relationship of (L1/L2) ≤ 0.7; and
a cross-sectional area of an outer primary groove (11), which is a primary groove positioned at an outermost position on the vehicle exterior side among the plurality of primary grooves (11, 12, 13, 14), is smaller than cross-sectional areas of the plurality of primary grooves (12, 13, 14) other than the outer primary groove (11).

2. The pneumatic tire (10) according to claim 1, wherein
the cross-sectional area of the outer primary groove (11) is greater than or equal to 70% and less than or equal to 80% with respect to any of the cross-sectional areas of the plurality of primary grooves (12, 13, 14) other than the outer primary groove (11).

3. The pneumatic tire (10) according to claim 1 or 2, wherein
in the ground-contacting region, a length of the outer primary groove (11) is greater than or equal to 90% and less than or equal to 95% with respect to a length of a primary groove closest to the tire equator (CL) among the plurality of primary grooves (12, 13, 14).

4. The pneumatic tire (10) according to any one of claims 1 to 3, further comprising:
a lateral groove (20) that communicates from the outer primary groove (11) to a tire outer side.

5. The pneumatic tire (10) according to claim 4, wherein
the lateral groove (20) is inclined at a predetermined angle with respect to a tire axial direction.

6. The pneumatic tire (10) according to any one of claims 1 to 5, wherein
among adjacent primary grooves (11, 12, 13, 14), a width of a primary groove positioned on the vehicle exterior side is less than or equal to a width of a primary groove positioned on the vehicle interior side.

7. The pneumatic tire (10) according to any one of claims 1 to 6, wherein
a width of the outer primary groove (11) is greater than or equal to 0.7 times and less than or equal to 0.8 times a width of a primary groove (12, 13, 14) having a largest width.
